# EUROPEAN PATENT SPECIFICATION

(11) **EP 3 260 763 B1**
(45) Date of publication and mention of the grant of the patent: **10.11.2021**
(21) Application number: 17173453.6
(22) Date of filing: 30.05.2017
(51) Int. Cl.: F21S 41/32, F21S 45/47, F21S 41/16, F21S 41/176, F21S 41/255, F21S 41/24

(54) **LIGHTING DEVICE FOR VEHICLE**
BELEUCHTUNGSVORRICHTUNG FÜR FAHRZEUG
DISPOSITIF D'ÉCLAIRAGE POUR VÉHICULE

(30) Priority: 14.06.2016 KR 20160074115
(43) Date of publication of application: 27.12.2017
(73) Proprietor: LG Electronics Inc., Seoul 07336 (KR)
(72) Inventor: PARK, Soyeon, 06772 Seoul (KR)
(74) Representative: Katérle, Axel

(56) References cited:
- DE-A1-102012 211 915
- DE-A1-102014 205 606
- JP-A- 2015 184 303
- US-A1- 2015 049 457
- US-A1- 2015 375 672

## Description

### The Background

### 1. The field

The present invention relates to a lighting device for a vehicle, and more specifically to a light device for a vehicle which at least one time reflects light irradiated from a light source and then projects the light to outside.

### 2. Description of the related art

A lighting device such as a lamp which causes a driver to secure visibility or can inform the current running state of the vehicle to the outside by increasing intensity of the illumination of the surrounding of the vehicle during running of the vehicle is installed in a vehicle.

The lighting device for a vehicle installed in the vehicle (hereinafter, referred to as "a lighting device for a vehicle") may be used to a head lamp which irradiates light to the front of the vehicle and a rear lamp which displays the heading direction of the vehicle, indicates whether or not the brake operates, or the like.

The lighting device for a vehicle may form a low beam or a high beam for securing visibility of a driver. Recently, use of an LED which has a high power efficiency and a long service life as a light source is gradually increased.

Meanwhile, it is possible to use a laser diode having a longer irradiation distance than the LED as a light source.

### Prior art document

### Patent Document

KR 10-2016-0012470 (published on February 03, 2016).

The patent application US2015/0375672-A1- discloses a vehicle headlamp comprising a light source, a phosphor placed on a reflective support base and a projection lens.

### The Summary

An objective of the present invention is to provide a lighting device for a vehicle which is capable of minimizing the number of components and thus manufacturing to be compact.

A lighting device for a vehicle according to the present invention in order to achieve the object described above includes the features of claim 1.

The reflective fluorescent body is disposed to be opposite to the rear side of the lens and may be capable of reflecting light toward a rear surface of the lens.

The reflective fluorescent body may be disposed on the optical axis of the lens.

At least one portion of the rod-shaped prism may be disposed between the reflective fluorescent body and the lens.

The sectional surface of the prism may have a circular shape.

The sectional surface of the prism may be a polygon having at least one pair of parallel sides.

The prism may have a length that allows the light which is incident on the prism to be totally reflected with a plurality of light.

The prism includes an incident surface on which light is incident and an emitting surface from which light is emitted.

The incident surface may be perpendicular to the rear surface of the lens.

The emitting surface may be perpendicular to the rear surface of the lens.

The incident surface and the emitting surface may be parallel to each other.

A convex lens for condensing light may be provided on at least one surface of the incident surface and the emitting surface.

An anti-reflection(AR) coating may be applied to at least one surface of the incident surface and the emitting surface.

A distance between a optical axis of the lens and the emitting surface is less than or equal to the radius of the rear surface of the lens.

According to embodiments of the present invention, the light of which size is reduced by a reducer is incident on the prism and then is reflected into the reflective fluorescent body. Accordingly, the size of the lens is capable of being minimized and the lens may be made compact. In addition, the prism used in the embodiment of the present invention has advantages that the structure thereof is simplified, the structure as a prism shape generally used is simplified, the number of the components is minimized and the lens may be made compact.

### BRIEF DESCRIPTION OF THE DRAWINGS

Fig. 1 is a construction view illustrating a lighting device for a vehicle according to an embodiment of the present invention,
Fig. 2 is a construction view illustrating an optical path of the lighting device for a vehicle according to the embodiment of the present invention,
Fig. 3 is a perspective view illustrating the lighting device for a vehicle according to the embodiment of the present invention,
Fig. 4 is a construction view illustrating a lighting device for a vehicle according to another embodiment of the present invention,
Fig. 5 is a plan view illustrating a position relationship between a lens and a prism according to another embodiment of the present invention,
Fig. 6 is a perspective view illustrating the prism and a condensing lens according to the embodiment of the present invention, and
Fig. 7 is a cross-sectional view illustrating the prism in Fig. 6.

### The Detailed description

Hereinafter, a specific embodiment of the present invention will be described in detail with reference to the drawing.

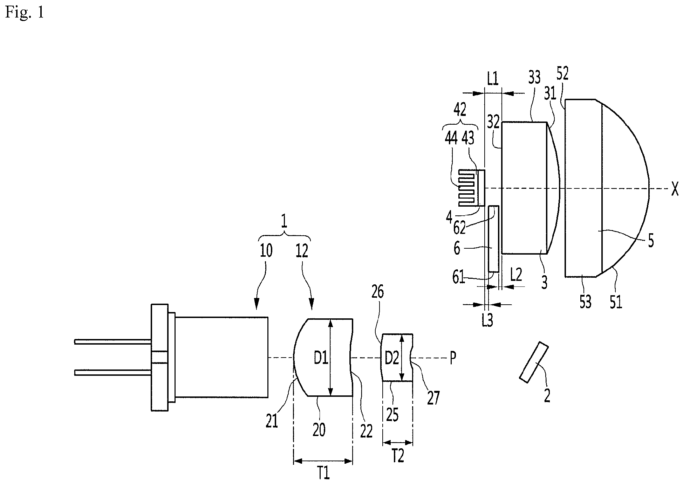

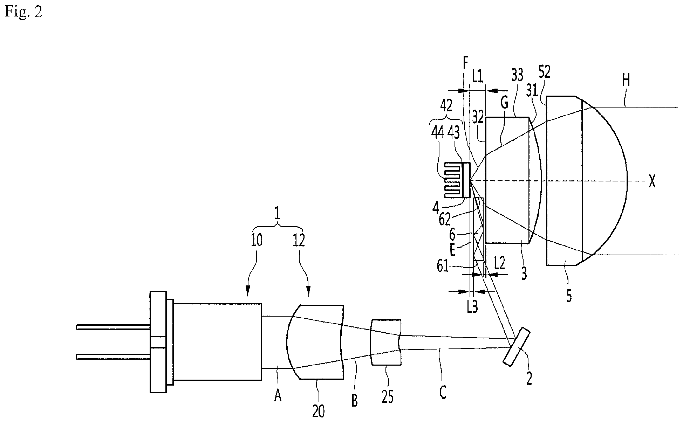

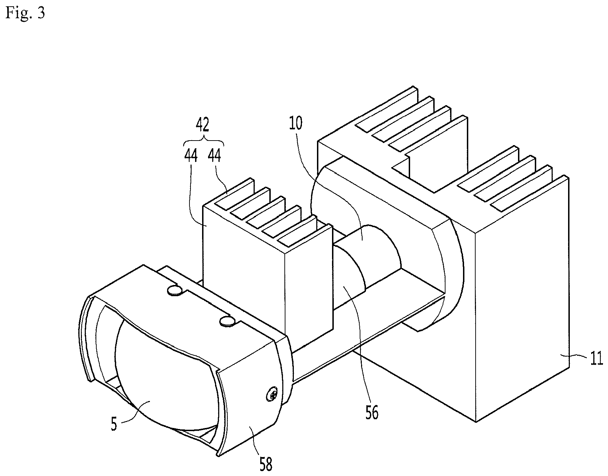

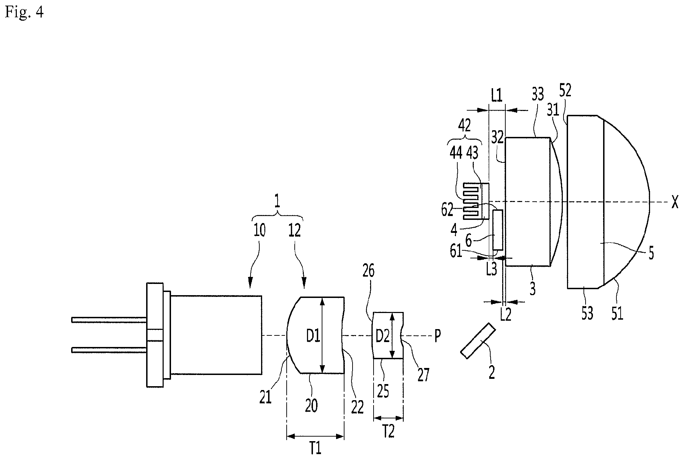

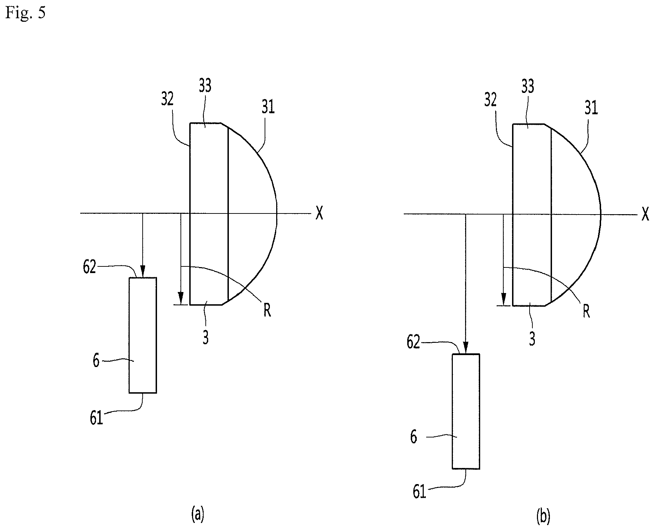

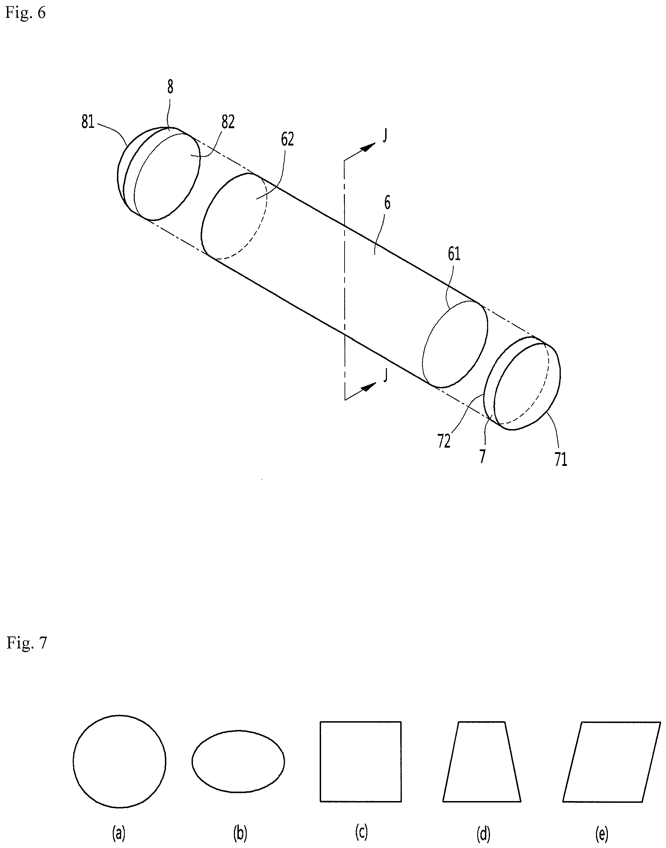

Fig. 1 is a construction view illustrating a lighting device for a vehicle according to an embodiment of the present invention, Fig. 2 is a construction view illustrating an optical path of the lighting device for a vehicle according to the embodiment of the present invention, Fig. 3 is a perspective view illustrating the lighting device for a vehicle according to the embodiment of the present invention, Fig. 4 is a construction view illustrating a lighting device for a vehicle according to another embodiment of the present invention, Fig. 5 is a plan view illustrating a position relationship between a lens and a prism according to another embodiment of the present invention, Fig. 6 is a perspective view illustrating the prism and a condensing lens according to the embodiment of the present invention, and Fig. 7 is a cross-sectional view illustrating the prism in Fig. 6.

The lighting device for a vehicle may include a light source device 1, a reflecting unit 2, a rod-shaped prism 6, a lens 3 and a reflective fluorescent body 4.

The lighting device for a vehicle may constitute a head lamp of the vehicle and may be used as a high beam lighting device which generates a high beam or may be used as a low beam lighting device which generates a low beam.

The light source device 1 is capable of emitting light toward the prism.

The light source device 1 is capable of emitting light toward the reflecting unit 2. The light being incident on the reflecting unit 2 is reflected from the reflecting unit 2 and then is capable of being incident on the prism 6.

The light source device 1 may be include the light source 10. The light source 10 may receives electric energy and then may converts the electric energy into light energy, and may be a light emitting source such as an ultra high pressure mercury lamp (UHV Lamp), a light emission diode (LED), and a laser diode.

A light source 10 preferably is a light source which is capable of being irradiated with light from a long distance while having an excellent feature of straightness and high efficiency. Also, The light source 10 preferably is a laser diode. The laser diode which is a light source preferably is a laser diode which irradiates with a blue based laser light having high efficiency.

A heat radiation member 11 which radiates heat generated in the light source 10 is connected to the light source 10 as illustrated in Fig. 3. The heat radiation member 11 may includes a contact plate which is in contact with the light source 10 and a heat radiation fin which is projected from the contact plate.

The light source device 1 may further include a reducer which reduces the size of the light emitted from the light source 10 and then emits the light toward the reflecting unit 2. The beam emitted from the light source 10 passed through the reducer and then may be emitted toward the reflecting unit 2. The detail description of the reducer 12 will be described below.

The lens 3 has a larger size than the size of the reflective fluorescent body 4 and the reflecting unit 2 and is capable of protecting the reflective fluorescent body 4 and the reflecting unit 2 at the front side of the reflective fluorescent body 4.

The lens may have a cylindrical shape or polygonal pillar shape. The lens 3 may include a front surface 31, a rear surface 32, and a peripheral surface 33.

The front surface 31 of the lens 3 may have a convex curved surface toward the front side and the rear surface 32 of the lens 3 may have a flat surface or a recessed curved surface toward the front side.

The lens 3 may include an optical axis X. The front surface 31 of the lens 3 is a convex condensing lens and the front surface 31 of the lens 3 may be symmetrical relative to the optical axis (X). Here, the optical axis X of the lens 3 may be a rotational symmetrical axis or a center axis and may mean a straight line which passes through the centers of the front surface 31 and the rear surface 32 of the lens 3.

The lighting device for a vehicle further including a projection lens 5 which is to be disposed on the front side of the lens 3.

The projection lens 5 may have a greater size than the size of the lens 3. The optical axis of the projection lens 5 can be matched with the optical axis X of the lens 3.

The projection lens 5 may include a front surface 51, a rear surface 52, and a peripheral surface 53. The front surface 51 of the projection lens 5 may be a convex surface toward the front side. The rear surface 52 of the projection lens 5 may be a flat surface. The projection lens 5 may have a symmetrical structure about the optical axis.

The reflective fluorescent body 4 may be disposed on the rear side of the lens 3 and may convert wavelength of the light reflected at the reflecting unit 2 and then reflect to the lens 3.

Heat may be generated at the reflective fluorescent body 4 at the time of wavelength conversion of the light and thus preferably is disposed to be separated from the lens 3. The reflective fluorescent body 4 is disposed on the rear side of the lens 3 to be spaced apart from the lens 3.

The reflective fluorescent body 4 may be disposed to be face the rear surface 32 of the lens 3 and may reflect light toward the rear surface 32 of the lens 3.

The reflective fluorescent body 4 is disposed on the optical axis X of the lens 3 to be spaced apart from the rear surface 32 of the lens 3. The front surface of the reflective fluorescent body 4 is parallel to the rear surface 32 of the lens 3.

The reflective fluorescent body 4 is capable of being eccentrically disposed with respect to the optical axis X of the lens 3 in addition to being disposed on the optical axis X of the lens 3. However, in this case, the efficiency is low because an area through which light reflected from the reflective fluorescent body 4 is transmitted is smaller than the area in a case where the reflective fluorescent body 4 is disposed on the optical axis X of the lens.

Further, in a case where the reflective fluorescent body 4 is disposed to be eccentric with respect to the optical axis X of the lens 4 in addition to the optical axis X of the lens, the area through which light reflected from the reflective fluorescent body 4 is transmitted and the other area in the projection lens 5 may be asymmetrical. In this case, the manufacturing process of the projection lens 5 complicates and thus the manufacturing cost of the projection lens 5 may be increased.

However, when the reflective fluorescent body 4 is disposed on the optical axis X of the lens 3, the projection lens 5 may be formed to be symmetrical about the optical axis and thus the manufacturing cost of the projection lens 5 may be reduced.

In other words, the reflective fluorescent body 4 is preferably disposed to the optical axis X of the lens (3).

The reflective fluorescent body 4 may includes a wavelength conversion layer which faces the rear surface 32 of the lens 3 and a reflecting unit which is disposed on the rear side of the wavelength conversion layer.

The wavelength conversion layer may include a wave conversion film and may include an opto ceramic. The wavelength conversion layer is capable to converting the wavelength of the light reflected at the reflecting unit 2 in a state of being positioned at the front side of the reflecting unit. When the blue based light is incident on the wavelength conversion layer from the outside, the wavelength conversion layer may be a wavelength conversion film which converts into the yellow based light. The wavelength conversion layer may include an opto ceramic having yellow color.

The reflecting unit may include a plate and a reflecting coating layer which is coated the outside surface of the plate. The plate made of a metal. The reflecting unit may support the wavelength conversion layer and light transmitted through the wavelength conversion layer may be reflected toward the rear surface 32 of the lens 3 by the reflecting unit.

when blue based light is incident on the reflective fluorescent body 4 through the prism, a portion of the blue based light is surface-reflected and the light which is incident on the inner portion of the wavelength conversion layer of the blue based light is capable of being excited in the inner portion of the wavelength conversion layer and the light may be reflected to the front side of the wavelength conversion layer by the reflecting unit.

The blue based light which is surface-reflected from the surface of the wavelength conversion layer and yellow based light which is emitted to the front side of the wavelength conversion layer may be mixed and white based light is emitted to the front side of the front surface of the reflective fluorescent body 4. This white based light may be transmitted through the lens 3 and may be emitted toward the front side of the lens 3.

A portion of the white based light emitted from the reflective fluorescent body 4 may be incident on the emitting surface 62 of the prism 6. The white based light emitted to the prism 6 is totally reflected from the inner portion of the prism 6 and then may be emitted to the incident surface 61 of the prism 6. Therefore, the efficiency of the light source device 1 may be reduced.

A distance L1 between the reflective fluorescent body 4 and the lens 3 may determine the width of the lighting device for a vehicle in the longitudinal direction, and preferably, the reflective fluorescent body 4 is closely disposed to the lens 3 within the range in which the damage of the lens 3 by heat is minimized.

The heat radiating member 42 which assists to radiate heat of the reflective fluorescent body 4 may be disposed in the reflective fluorescent body 4. The heat radiation member 42 may includes a contact plate 43 which is in contact with the reflective fluorescent body 4, and a heat radiation fin 44 which is projected from the contact plate 43.

The contact plate 43 is attached to the rear surface of the reflecting unit to be surface-contacted.

The reflective fluorescent body 4 has a lower optical efficiency than the transmissive fluorescent body. However, the structure for cooling fluorescent body is easily implement and the cooling efficiency is high.

Meanwhile, the reflecting unit 2 may be provided to reflect the incident light to the prism 6.

The prism 6 includes an incident surface 61 on which light is incident and an emitting surface 62 from which light is emitted.

When the reflecting unit 2 is not provided in the lighting device for a vehicle, the light emitted from the light source device 1 may be incident on the incident surface 61 of the prism 6.

When the reflecting unit 2 is provided in the lighting device for a vehicle, the light reflected from the reflecting unit 2 may be incident on the incident surface of the prism 6.

The light which is incident on the inner portion of the prism 6 through the incident surface 61 may be totally reflected in the inner portion of the prism 6. The total reflection may be reflected without optical loss, as a physical phenomena.

The total reflection is generated in a case where an angle of the light which is incident on the boundary surface is greater than a critical angle according to Snell's law. At this time, the boundary surface may be a surface of the prism 6 and the refractive index of the prism 6 may be greater than the refractive index of the outside of the prism 6. For example, the outside of the prism 6 may be made of air and the prism 6 may be made of a material having e refractive index which is greater than the refractive index of air.

In this case, the light which is incident on the incident surface 61 is totally reflected from the inner portion of the prism 6 and then may be emitted through the emitting surface 62. The light which is emitted through the emitting surface 62 of the prism 6 may be incident on the reflective fluorescent body 4.

The total reflection may occur in a plural number of times on the inner portion of the prism 6, The number of times of the total reflection may be changed according to the length of the prism 6. Further, the number of times of the total reflection may be changed according to the thickness of the prism 6. Further, the number of times of the total reflection may be changed according to the incident angle of the light which is incident on the incident surface 61 of the prism 6. Preferably, the incident angle of the light on the incident surface 61 of the prism 6 is greater than the critical angle for occurring the total reflection.

The reflecting unit 2 may be disposed in the front side with respect to the rear surface of the lens 3 as illustrated in Fig. 1 and Fig. 2. In addition, The reflecting unit 2 may be disposed in the rear side with respect to the rear surface of the lens 3 as illustrated in Fig. 4. The incident angle of the light which is incident on the prism 6 according to the position on which the reflecting unit 2 is disposed may be changed. Further, the incident angle of the light which is incident on the prism 6 according to the angle between the incident light on the reflecting unit 2 and the reflecting surface of the reflecting unit 2 may be changed. In any case, preferably, the incident angle of the light on the incident surface of the prism 6 is greater than the critical angle for occurring the total reflection.

The prism 6 has a rod shape. The incident surface 61 may be one end of the prism 6 and the emitting surface 62 may be the other end thereof. The boundary surface which occurs the total reflection may be a side surface or a perimeter surface.

In addition, the incident surface 61 may be one side surface of the prism 6 and the emitting surface 62 may be the other side surface thereof. The boundary surface which occurs the total reflection may be a side surface or a perimeter surface.

The incident surface 61 of the prism 6 may have a flat surface. Further, the emitting surface 62 of the prism 6 may have a flat surface. Further, the incident surface 61 and the emitting surface 62 is positioned to be parallel to each other.

The prism 6 is disposed on the rear side of the lens 3. Alternatively, the prism 6 may be disposed on the front side of the reflective fluorescent body 4. Alternatively, the prism 6 may be disposed between the rear surface of the lens 3 and the reflective fluorescent body 4.

According to the invention, the perimeter surface of the prism 6 is in contact with the rear surface of the lens 3. As an alternative outside the scope of the claimed invention, the perimeter surface of the prism 6 is spaced apart from the rear side of the lens 3. Further, the reflective fluorescent body 4 is spaced apart from the perimeter surface of the prism 6.

The distance L1 between the reflective fluorescent body 4 and the lens 3 is greater than the distance L2 between the prism 6 and the lens 3.

The distance L1 between the reflective fluorescent body 4 and the lens 3 may be greater than the distance L3 between the prism 6 and the reflective fluorescent body 4.

The incident surface 61 of the prism 6 is disposed to be perpendicular to the rear side of the lens 3. The emitting surface 62 of the prism 6 is disposed to be perpendicular to the rear surface of the lens 3.

The emitting surface 62 of the prism 6 may be positioned to include the optical axis X of the lens 3.

The emitting surface 62 of the prism 6 may be positioned to be spaced apart from the optical axis X of the lens 3. The rear surface of the lens 3 may have a radius R.

The distance between the emitting surface 62 of the prism 6 and the optical axis X of the lens 3 may be smaller than the radius R of the rear surface of the lens 3. Further, the distance between the emitting surface 62 of the prism 6 and the optical axis X of the lens 3 may be equal to the radius R of the rear surface of the lens 3. Further, the distance between the emitting surface 62 of the prism 6 and the optical axis X of the lens 3 may be greater than the radius R of the rear surface of the lens 3.

According to the distance between the emitting surface 62 of the prism 6 and the optical axis X of the lens 3, the prism 6 may not be disposed between the reflective fluorescent body 4 and the lens 3.

According to the distance between the emitting surface 62 of the prism 6 and the optical axis X of the lens 3, a portion of the prism 6 may be disposed between the reflective fluorescent body 4 and the lens 3.

The incident surface 62 or the emitting surface 62 of the prism 6 may include a coating surface for increasing the light transmittance. The coating surface may be an anti-reflection coating surface.

The incident surface 61 of the prism 6 may include a first condensing lens 7 for condensing light. The front surface of the first condensing lens 7 may have a convex curved surface toward the front side and the rear surface thereof may have a flat surface. The incident surface 61 and the rear surface of the first condensing lens 7 may be adhered or bonded to each other. Alternatively, the prism 6 and the first condensing lens 7 may integrally formed with each other. In this case, the incident surface 61 of the prism 6 and the rear surface of the first condensing lens 7 may be the same surface.

The first condensing lens 7 may serve to collect the light that is incident on from the prism 6. The light which is condensed through the first condensing lens 7 is not distributed or scattered and may be totally reflected in the inner portion of the prism 6.

The convex surface of the first condensing lens 7 may be an anti-reflection (AR) coating surface. Preferably, the reflection does not occur from the surface of the first condensing lens 7, since the first condensing lens 7 serves to collect the light to the inner portion of the prism 6.

The emitting surface 62 of the prism 6 may include a second condensing lens 8 for condensing light. The front surface of the second condensing lens 8 may have a convex curved surface toward the front side and the rear surface of the second condensing lens 8 may have a flat surface. The emitting surface 62 and the rear surface of the second condensing lens 8 may be adhered or bonded to each other. Alternatively, the prism 6 and the second condensing lens 8 may integrally formed with each other. In this case, the emitting surface 62 of the prism 6 and the rear surface of the second condensing lens 8 may be the same surface.

The second condensing lens 8 may serve to collect the light that is emitted from the prism 6. The light which is condensed through the second condensing lens 8 is not distributed or scattered and may be emitted to the outside portion of the prism 6 and thus is incident on the reflective fluorescent body 4.

The convex surface of the second condensing lens 8 may be an anti-reflection (AR) coating surface. Preferably, the reflection does not occur from the second condensing lens 8, since the second condensing lens 8 serves to collect the light that is emitted to the outside portion of the prism (6).

Fig. 7 is a sectional view taken along the line J-J. The prism 6 may have various shapes including cross-sectional shapes illustrated in Fig. 7A to Fig. 7E.

The cross-section of the prism 6 may have a circular shape as illustrated in Fig. 7A, an oval shape as illustrated in Fig. 7B, a rectangular shape as illustrated in Fig. 7C, a trapezoid shape as illustrated in Fig. 7D, and a parallelogram shape as illustrated in Fig. 7D.

The inner portion of the prism 6 serves to allow the incident light to be totally reflected, and thus the prism 6 may have any shape if the shape of the prism 6 may be a shape which is capable of occurring the total reflection from the inner portion of the prism. Specifically, the cross-sectional shape of the prism 6 may have a polygonal shape which has a pair of sides which is parallel to each other.

The light reducer 12 may be disposed between the lens 3 and the light source 10. The light reducer 12 is disposed between the rear surface 32 of the lens 3 and the light source 10 to be spaced apart from the lens 3 and the front surface of the light source 10 respectively.

The light reducer 12 is spaced apart the optical axis X of the lens 3. A portion of the light reducer 12 may be positioned on the optical axis X of the lens 3. However the optical axis P of the light reducer 12 is spaced apart from the optical axis X of the lens 3.

The light reducer 12 is disposed on the rear side of the lens 3 and emits light in the direction parallel to the optical axis X of the lens 3. The optical axis P of the light reducer 12 may be parallel to the optical axis X of the lens 3.

The light reducer 12 may include a first reducer lens 20 in which light width is reduced while the light emitted from the light source 10 transmits through the first reducer lens 20 and a second reducer lens 25 which is spaced apart from the first reducer lens 20 and in which light width is reduced while the light emitted from the first reducer lens 20 transmits through the second reducer lens 30.

The first reducer lens 20 has an incident surface 21 and an emitting surface 22 and the second reducer lens 25 has an incident surface 26 and an emitting surface 27.

The emitting surface 22 of the first reducer lens 20 and the incident surface 26 of the second reducer lens 25 is space apart from each other. The emitting surface 22 of the first reducer lens 20 and the incident surface 26 of the second reducer lens 25 may be space apart in the direction parallel to the optical axis X of the lens 3. The first reducer lens 20 and the second reducer lens 30 may be spaced apart with air having between the first reducer lens 20 and the second reducer lens 25.

The first reducer lens 20 and the second reducer lens 25 may be spaced apart in the longitudinal direction. The emitting surface 22 of the first reducer lens 20 and the incident surface 26 of the second reducer lens 25 is space apart in the longitudinal direction.

The first reducer lens 20 may be positioned between the light source 10 and the second reducer lens 25 and the second reducer lens 25 may be positioned between the first reducer lens 20 and the lens 3.

The incident surface 21 of the first reducer lens 20 may face the light source 10.

The optical axis P of the first reducer lens 20 and the optical axis of the second reducer lens 25 may be the same each other.

The emitting surface 27 of the second reducer lens 25 may face the rear surface 32 of the lens 3. Preferably, the emitting surface 27 of the second reducer lens 25 does not face a heat radiating member 42 or the reflective fluorescent body 4.

The incident surfaces, on which light is incident, of first reducer lens 20 and the second reducer lens 25 may have a convex shape. The emitting surfaces, from which light is emitted, of first reducer lens 20 and the second reducer lens 25 may have a concave shape.

The rear surface of the first reducer lens 20 may be the incident surface 21 and the incident surface 21 may have a convex curved surface toward the rear side. The light which is incident from the light source 10 may be refracted at the convex incident surface 21 and the width of the light which transmits through the first reducer lens 20 may be gradually reduced, as illustrated in Fig. 2.

The front surface of the first reducer lens 20 may be the emitting surface 22 and the emitting surface 22 may have a concave depression curved surface toward the rear side. The entire front surface of the first reducer lens 20 may have a concave depression emitting surface 22. Only the center portion of the front surface of the first reducer lens 20 may have the concave depression emitting surface 22.

A portion of the emitting surface 22 of the first reducer lens 20 may face the incident surface 26 of the second reducer lens 25.

The rear surface of the second reducer lens 25 may be the incident surface 26 and the incident surface 26 may have a convex curved surface toward the rear side. The light which is emitted from the first reducer lens 20 and then passes through the air between the first reducer lens 20 and the second reducer lens 25 may be refracted at the convex incident surface 26 of the second reducer lens, and the width of the light transmitted through the second reducer lens 25 may be gradually reduced.

The front surface of the second reducer lens 25 may be the emitting surface 27 and the emitting surface 27 may have a concave depression curved surface toward the rear side. The entire front surface of the second reducer lens 25 may have a concave depression emitting surface 27. Only the center portion of the front surface of the second reducer lens 25 may have the concave depression emitting surface 27.

The entire emitting surface 27 of the second reducer lens 25 may face the rear surface 32 of the lens 3.

The diameter D2 of the second reducer lens 25 may be smaller than the diameter D1 of the first reducer lens 20. The thickness T2 of the second reducer lens 25 may be smaller than the thickness T1 of the first reducer lens 20.

The size of the second reducer lens 25 may be smaller than the size of the first reducer lens 20 in order to increase the peripheral space utilization, since the light is primarily reduced at the first reducer lens 20.

The curvatures of the incident surface 21 of the first reducer lens 20 and the incident surface 26 of the second reducer lens 25 may be the same each other or may be different from each other.

The reduction degree of the width of the light which is transmitted through the first reducer lens 20 is highly dependent on the curvature of the incident surface 21 of the first reducer lens 20. The reduction degree of the width of the light which is transmitted through the first reducer lens 20 may be increased as the curvature of the incident surface 21 of the first reducer lens 20 is increased.

In other words, the second reducer lens 25, the sizes of the reflecting unit 2, and the lens 3 may be decreased as the curvature of the incident surface 21 of the first reducer lens 20 is increased.

The light of which width is primarily reduced at the first reducer lens 20 may be incident on the incident surface 26 of the second reducer lens 25 and the incident surface 26 of the second reducer lens 25 is preferably configured that the light is not excessively reduced.

In a case where the curvature of the incident surface 21 of the first reducer lens 20 and the curvature of the incident surface 26 of the second reducer lens 25 is different from each other, preferably, the curvature of the incident surface 21 of the first reducer lens 20 is greater than the curvature of the incident surface 26 of the second reducer lens 26.

The curvatures of the emitting surface 22 of the first reducer lens 20 and the emitting surface 27 of the second reducer lens 25 may be the same each other or may be different from each other.

The first reducer lens 20 is capable of differentiating the width of the light emitted from the first reducer lens 20 according to the curvature of the emitting surface 22.

The emitting surface 22 of the first reducer lens 20 may have a curvature which allows the light which passes through the emitting surface 22 to be emitted in parallel. Further, the emitting surface 22 of the first reducer lens 20 may have a curvature which allows the light passed through the emitting surface 22 to be gradually reduced between the emitting surface 22 of the first reducer lens 20 and the incident surface 26 of the second reducer lens 25.

Preferably, the second reducer lens 25 is configured that the width of the light which is incident on the reflecting unit 2 may be different from each other according to the curvature of the emitting surface and the emitting surface 27 of the second reducer lens 25 is configured that the light passed through the emitting surface 27 is incident on the reflecting unit 2 in parallel.

In a case where the curvature of the emitting surface 22 of the first reducer lens 20 and the curvature of the emitting surface 27 of the second reducer lens 25 is different from each other, preferably, the curvature of the emitting surface 27 of the second reducer lens 25 is greater than the curvature of the emitting surface 22 of the first reducer lens 20.

Meanwhile, the lighting device for a vehicle may further include a light reducer supporter 56 (see Fig. 3) supporting the light reducer 12.

The light reducer supporter 56 has a shape surrounding the light reducer 12. The light reducer supporter 56 may be lengthened in the direction parallel to the optical axis X of the lens 3 and may have a light transmitting path through which light transmits in the inner portion thereof.

Further, the lighting device for a vehicle may further include a lens holder 58 which supports the lens 3 and the projection lens 5.

Hereinafter, an operation of the present invention having the configuration described above will be described as follow: Hereinafter, with reference to Fig. 2, it is described that the light source 10 emits the blue based light and the reflective fluorescent body 4 converts the wavelength of the blue based light into the wavelength of the yellow based light, for example.

First, when the light source 10 turns on, the blue based light A may be emitted from the light source 10 and the light A emitted from the light source 10 may be incident on the light reducer 12 in parallel.

The light A emitted from the light source 10 in parallel may be incident on the incident surface 21 of the first reducer lens 20, may refract at the incident surface 21 of the first reducer lens 20 and then the width of the light may be reduced.

The light refracted at the emitting surface 21 of the first reducer lens 20 my transmit through the first reducer lens 20 and thus may be emitted to the emitting surface 22 of the first reducer lens 20.

The light B emitted to the emitting surface 22 of the first reducer lens 20 is incident on the incident surface 26 of the second reducer lens 25 in parallel or the width of the light B is gradually reduced between the emitting surface 22 of the first reducer lens 20 and the incident surface 26 of the second reducer lens 25 and the light B may be incident on the incident surface 26 of the second reducer lens 25.

The light which is incident on the incident surface 26 of the second reducer lens 25 my transmit through the second reducer lens 25 and thus may be emitted through the emitting surface 27 of the second reducer lens 25 in parallel.

In other words, the light A emitted from the light source 10 sequentially transmits through the first reducer lens 20, the air between the first reducer lens 20 and the second reducer lens 25, and the second reducer lens 25 and thus the width of the light is reduced, and the light C of which the width is reduced may be incident on the reflecting unit 2.

The light C which is incident on the reflecting unit 2 is reflected at the reflecting unit 2 and the reflected light D may be incident on the incident surface 61 of the prism 6. In a case where the prism 6 includes the first condensing lens, the reflected light D may be incident on the convex surface of the first condensing lens.

The light E which is incident on the prism 6 is totally reflected from the inner portion of the prism passes through the prism 6. The total reflection may occur in plural number of times according to the incident angle of light or the length of the prism 6.

The light F passed through the prism 6 may be emitted to the emitting surface 62 of the prism 6. In a case where the prism 6 includes the second condensing lens, the emitted light D may be emitted to the convex surface of the second condensing lens.

The light F emitted from the emitting surface of the prism 6 may be incident on the reflective fluorescent body 4. The wavelength of the light which is incident on the reflective fluorescent body 4 may be changed by the reflective fluorescent body 4 and the white based light F may be irradiated to the rear surface 32 of the lens 3 in the reflective fluorescent body 4.

The light irradiated to the rear surface 32 of the lens 3 in the reflective fluorescent body 4 may transmit through the lens 3, and the light G transmits through the front surface 31 of the lens 31 and then may be incident on the projection lens 5 through the rear surface 52 of the projection lens 5.

The light which is incident on the projection lens 5 transmits through the projection lens 5, is refracted at the front surface 51 of the projection lens 5 and thus may be emitted to the front side of the projection lens 5 in parallel.

The light H emitted to the front side of the projection lens 5 may be irradiated in the front side of the vehicle.

Although embodiments have been described with reference to a number of illustrative embodiments thereof, it should be understood that numerous other modifications and embodiments can be devised by those skilled in the art that will fall within the scope of the invention as defined in the claims.

## Claims

1. A lighting device for a vehicle, comprising:
a lens (3);
a rod-shaped prism (6) which is disposed on a rear side of the lens and totally reflects an incident light and then emits the light;
a light source device (1) which emits light toward the rod-shaped prism and
a reflective fluorescent body (4) which is disposed on the rear side of the lens and wavelength-converts light emitted by the rod-shaped prism and then reflects the light to the lens,
wherein the rod-shaped prism (6) includes an emitting surface (62) which is spaced apart from an optical axis of the lens,
wherein a distance (L1) between the reflective fluorescent body (4) and a rear surface (32) of the lens (3) is greater than a distance (L2) between the emitting surface (62) and the rear surface (32) of the lens (3),
wherein the rod-shaped prism (6) further includes an incident surface (61) on which light is incident and a perimeter surface,
wherein a distance between the optical axis (X) of the lens and the emitting surface (62) is less than a radius of the rear surface (32) of the lens, and
wherein the perimeter surface of the rod-shaped prism is in contact with the rear surface of the lens.

2. The lighting device for a vehicle according to claim 1,
wherein the reflective fluorescent body (4) is disposed to face the rear surface of the lens and reflects the light toward the rear surface of the lens.

3. The lighting device for a vehicle according to claim 1 or 2,
wherein the reflective fluorescent body (4) is disposed on the optical axis of the lens.

4. The lighting device for a vehicle according to any one preceding claim,
wherein at least a portion of the rod-shaped prism (6) is disposed between the reflective fluorescent body and the lens.

5. The lighting device for a vehicle according to any one preceding claim,
wherein a sectional surface of the rod-shaped prism (6) is a circular shape.

6. The lighting device for a vehicle according to any one of claims 1 to 4,
wherein a sectional surface of the rod-shaped prism (6) has a polygonal shape having at least one pair of parallel sides.

7. The lighting device for a vehicle according to any one preceding claim,
wherein the rod-shaped prism (6) has a length that allows the light which is incident on the rod-shaped prism (6) to be totally reflected a plural number of the times.

8. The lighting device for a vehicle according to any one of claims 1 to 7,
wherein the incident surface (61) is perpendicular to the rear surface of the lens.

9. The lighting device for a vehicle according to any one of claims 1 to 8,
wherein the emitting surface (62) is perpendicular to the rear surface of the lens.

10. The lighting device for a vehicle according to any one of claims 1 to 9,
wherein the incident surface (61) and the emitting surface (62) are parallel to each other.

11. The lighting device for a vehicle according to any one of claims 1 to 10,
wherein a convex lens for condensing light is provided on at least one of the incident surface and the emitting surface of the rod-shaped prism (6).

12. The lighting device for a vehicle according to any one of claims 1 to 11,
wherein an anti-reflection coating is applied to at least one of the incident surface and the emitting surface of the rod-shaped prism (6).

13. The lighting device for a vehicle according to any one preceding claim, further comprising:
a light reducer (12) disposed between the lens and the light source device.

## Patentansprüche

1. Beleuchtungsvorrichtung für ein Fahrzeug, umfassend:
eine Linse (3);
ein stabförmiges Prisma (6), das an einer Rückseite der Linse angeordnet ist und
ein einfallendes Licht total reflektiert und dann das Licht emittiert;
eine Lichtquellenvorrichtung (1), die Licht in Richtung des stabförmigen Prismas emittiert, und
einen reflektierenden fluoreszierenden Körper (4), der auf der Rückseite der Linse angeordnet ist und von dem stabförmigen Prisma emittiertes Licht wellenlängenumwandelt und dann das Licht zur Linse reflektiert,
wobei das stabförmige Prisma (6) eine emittierende Oberfläche (62) enthält, die von einer optischen Achse der Linse beabstandet ist,
wobei ein Abstand (L1) zwischen dem reflektierenden fluoreszierenden Körper (4) und einer Rückseite (32) der Linse (3) größer ist als ein Abstand (L2) zwischen der emittierenden Oberfläche (62) und der Rückseite (32) der Linse (3),
wobei das stabförmige Prisma (6) ferner eine Einfallsfläche (61), auf die Licht einfällt, und eine Umfangsfläche enthält,
wobei ein Abstand zwischen der optischen Achse (X) der Linse und der emittierenden Oberfläche (62) kleiner ist als ein Radius der Rückseite (32) der Linse und
wobei die Umfangsfläche des stabförmigen Prismas mit der Rückseite der Linse in Kontakt steht.

2. Beleuchtungsvorrichtung für ein Fahrzeug nach Anspruch 1,
wobei der reflektierende fluoreszierende Körper (4) so angeordnet ist, dass er der Rückseite der Linse zugewandt ist und das Licht zur Rückseite der Linse reflektiert.

3. Beleuchtungsvorrichtung für ein Fahrzeug nach Anspruch 1 oder 2,
wobei der reflektierende fluoreszierende Körper (4) auf der optischen Achse der Linse angeordnet ist.

4. Beleuchtungsvorrichtung für ein Fahrzeug nach einem der vorhergehenden Ansprüche,
wobei zumindest ein Abschnitt des stabförmigen Prismas (6) zwischen dem reflektierenden fluoreszierenden Körper und der Linse angeordnet ist.

5. Beleuchtungsvorrichtung für ein Fahrzeug nach einem der vorhergehenden Ansprüche,
wobei eine Schnittfläche des stabförmigen Prismas (6) kreisförmig ist.

6. Beleuchtungsvorrichtung für ein Fahrzeug nach einem der Ansprüche 1 bis 4,
wobei eine Schnittfläche des stabförmigen Prismas (6) eine polygonale Form mit zumindest einem Paar paralleler Seiten aufweist.

7. Beleuchtungsvorrichtung für ein Fahrzeug nach einem der vorhergehenden Ansprüche,
wobei das stabförmige Prisma (6) eine Länge hat, die es ermöglicht, dass das auf das stabförmige Prisma (6) einfallende Licht mehrere Male total reflektiert wird.

8. Beleuchtungsvorrichtung für ein Fahrzeug nach einem der Ansprüche 1 bis 7,
wobei die Einfallsfläche (61) senkrecht zur Rückseite der Linse ist.

9. Beleuchtungsvorrichtung für ein Fahrzeug nach einem der Ansprüche 1 bis 8,
wobei die emittierende Oberfläche (62) senkrecht zur Rückseite der Linse ist.

10. Beleuchtungsvorrichtung für ein Fahrzeug nach einem der Ansprüche 1 bis 9,
wobei die Einfallsfläche (61) und die emittierende Oberfläche (62) parallel zueinander sind.

11. Beleuchtungsvorrichtung für ein Fahrzeug nach einem der Ansprüche 1 bis 10,
wobei eine konvexe Linse zum Kondensieren von Licht auf zumindest einer von der Einfallsfläche und der emittierenden Oberfläche des stabförmigen Prismas (6) vorgesehen ist.

12. Beleuchtungsvorrichtung für ein Fahrzeug nach einem der Ansprüche 1 bis 11,
wobei eine Antireflexionsbeschichtung auf zumindest einer von der Einfallsfläche und der emittierenden Oberfläche des stabförmigen Prismas (6) aufgebracht ist.

13. Beleuchtungsvorrichtung für ein Fahrzeug nach einem der vorhergehenden Ansprüche, ferner umfassend:
ein Lichtreduzierstück (12), das zwischen der Linse und der Lichtquellenvorrichtung angeordnet ist.

## Revendications

1. Dispositif d'éclairage pour un véhicule, comprenant :
une lentille (3) ;
un prisme en forme de tige (6) qui est disposé sur une face arrière de la lentille et reflète entièrement la lumière incidente et émet ensuite la lumière ;
un dispositif de source lumineuse (1) qui émet la lumière en direction du prisme en forme de tige ; et
un corps fluorescent réflecteur (4) qui est disposé sur la face arrière de la lentille et convertit en longueur d'onde la lumière émise par le prisme en forme de tige et ensuite réfléchit la lumière vers la lentille,
le prisme en forme de tige (6) comprenant une surface émettrice (62) qui est éloignée d'un axe optique de la lentille,
une distance (L1) entre le corps fluorescent réflecteur (4) et une surface arrière (32) de la lentille (3) étant supérieure à une distance (L2) entre la surface émettrice (62) et la surface arrière (32) de la lentille (3),
le prisme en forme de tige (6) comprenant en outre une surface incidente (61) sur laquelle la lumière est incidente et une surface de périmètre,
une distance entre l'axe optique (X) de la lentille et la surface émettrice (62) étant inférieure à un rayon de la surface arrière (32) de la lentille, et
la surface de périmètre du prisme en forme de tige étant en contact avec la surface arrière de la lentille.

2. Dispositif d'éclairage pour un véhicule selon la revendication 1,
le corps fluorescent réflecteur (4) étant disposé de manière à faire face à la surface arrière de la lentille et réfléchissant la lumière en direction de la surface arrière de la lentille.

3. Dispositif d'éclairage pour un véhicule selon la revendication 1 ou 2,
le corps fluorescent réflecteur (4) étant disposé sur l'axe optique de la lentille.

4. Dispositif d'éclairage pour un véhicule selon l'une quelconque revendication précédente,
au moins une partie du prisme en forme de tige (6) étant disposée entre le corps fluorescent réflecteur et la lentille.

5. Dispositif d'éclairage pour un véhicule selon l'une quelconque revendication précédente,
une surface sectionnelle du prisme en forme de tige (6) présentant une forme circulaire.

6. Dispositif d'éclairage pour un véhicule selon l'une quelconque revendication précédente 1 à 4,
une surface sectionnelle du prisme en forme de tige (6) présentant une forme polygonale ayant au moins une paire de côtés parallèles.

7. Dispositif d'éclairage pour un véhicule selon l'une quelconque revendication précédente,
le prisme en forme de tige (6) ayant une longueur qui permet à la lumière qui est incidente sur le prisme en forme de tige (6) d'être entièrement réfléchie plusieurs fois.

8. Dispositif d'éclairage pour un véhicule selon l'une quelconque revendication précédente 1 à 7,
la surface incidente (61) étant perpendiculaire à la surface arrière de la lentille.

9. Dispositif d'éclairage pour un véhicule selon l'une quelconque revendication précédente 1 à 8,
la surface incidente (62) étant perpendiculaire à la surface arrière de la lentille.

10. Dispositif d'éclairage pour un véhicule selon l'une quelconque revendication précédente 1 à 9,
la surface incidente (61) et la surface émettrice (62) étant parallèles entre elles.

11. Dispositif d'éclairage pour un véhicule selon l'une quelconque revendication précédente 1 à 10,
une lentille convexe pour condenser la lumière étant disposée sur la surface incidente et/ou la surface émettrice du prisme en forme de tige (6).

12. Dispositif d'éclairage pour un véhicule selon l'une quelconque revendication précédente 1 à 11,
un revêtement antireflet est appliqué sur la surface incidente et/ou la surface émettrice du prisme en forme de tige (6).

13. Dispositif d'éclairage pour un véhicule selon l'une quelconque revendication précédente,
comprenant en outre :
un réducteur de lumière (12) disposé entre la lentille et le dispositif de source lumineuse.
